# EUROPEAN PATENT APPLICATION

(11) **EP 4 790 626 A1**
(43) Date of publication of application: **12.08.2026**
(21) Application number: 26156989.1
(22) Date of filing: 06.02.2026
(51) Int. Cl.: G06Q 30/0201, G06Q 30/0283, G06Q 50/40

(54) **SYSTEM FOR CALCULATING AT LEAST ONE TARGET PARAMETER OF A VEHICLE**

(30) Priority: 07.02.2025 IT 202500002355
(71) Applicant: GATE Mobility B.V., 10156 Torino (IT)
(72) Inventor: SANFILIPPO, Fabrizio, 10156 TORINO (IT); VITI, Andrea, 10156 TORINO (IT)
(74) Representative: Studio Torta S.p.A.

(57) **Abstract**

System (10) for determining one or more target parameters of a vehicle (20), comprising a configurator module (12) and a calculation module (14), wherein the configurator module (12) is configured to receive input data as input and, based on the input data, generate at least one configuration as output, the configurator module (12) being configured, on the basis of the input data, to implement one or more models (M1-MM), each corresponding to a respective list of information to be retrieved starting from the input data for determining the one or more target parameters, and to compile the one or more models (M1-MM) according to the input data, said at least one configuration corresponding to the one or more models (M1-MM) compiled, and wherein the calculation module (14) is configured to receive the at least one configuration and, based on it, generate said one or more target parameters.

## Description

### CROSS-REFERENCE TO RELATED APPLICATIONS

This patent application claims priority from Italian patent application no. 102025000002355 filed on February 7, 2025, the entire disclosure of which is incorporated herein by reference.

### TECHNICAL FIELD

The present invention relates to a system for calculating at least one target parameter of a vehicle, in particular one or more cost/revenue parameters such as a price per kilometer of the vehicle. Furthermore, it relates to a method for calculating this at least one target parameter and a corresponding computer program product.

The present invention finds its preferred, though not exclusive or limiting, application in vehicles, e.g. light or heavy-duty vehicles.

### BACKGROUND OF THE INVENTION

As is known, the calculation of cost/revenue parameters (e.g., the price per kilometer, PPK) and of utilization parameters (e.g., efficiency of the engine or other vehicle components, CO₂ emissions, etc.) of a vehicle is important for activities such as the marketing, management and driving of vehicles.

For example, the PPK is a clear indicator of the cost for driving a vehicle, which has a significant impact on its hire and utilization.

The strategies for calculating these parameters are well known and manifold and obviously vary based on the specific parameter of interest. In general, many of these strategies depend on several factors, such as the driving style and the specific vehicle's properties (e.g., average fuel consumption).

The difficulty of calculating these parameters automatically in an organic, simple and repeatable manner is well known, due to the large number of factors on which they depend and the various, and often complex, calculation strategies that are involved.

In addition, errors in the calculation of these parameters can have a strong negative impact on the marketing, management or utilization of the vehicle. Consequently, it is necessary to find a solution that allows an accurate and reliable calculation of these parameters.

For example, it is necessary to accurately determine the PPK, in order to improve the vehicle's marketing possibilities (e.g., by offering contractual and economic solutions customised according to the user's needs). The importance of a correct calculation of a parameter such as the PPK is even more evident if one considers that the value of the PPK is often fixed for the entire duration of the vehicle's hire contract (e.g., three to five years).

However, the currently known solutions are not able to guarantee this accurate calculation of the parameters of interest. For example, the known solutions often work with discrete accuracy only in specific and standard cases and are not able to duly take into account possible variations or peculiarities (e.g., discounts applied for specific suppliers, driving habits of the users, type of mission of the vehicle, etc.). This difficulty in customizing the automatic parameter calculation solutions therefore often causes an inaccurate determination thereof, with the consequent disadvantages described above.

Aim of the present invention is to provide a solution that overcomes the drawbacks of the prior art.

### SUMMARY OF THE INVENTION

The object of the present invention is to fulfil the above-mentioned needs.

The aforementioned object is achieved by a system, a method and a computer program product for the calculation of at least one target parameter of a vehicle, as defined in the appended claims that form an integral part of the present description.

### BRIEF DESCRIPTION OF THE DRAWINGS

For a better understanding of the present invention, a preferred embodiment is now described, by way of non-limiting example only, with reference to the accompanying drawings, in which:
- Figure 1 is a block diagram of a system for determining one or more target parameters of a vehicle, according to an embodiment of the present invention; and
- Figure 2 is a block diagram of details of the system of Figure 1 according to an embodiment of the present invention.

In the description below, elements common to the various embodiments are indicated with the same reference numbers.

### DETAILED DESCRIPTION OF THE INVENTION

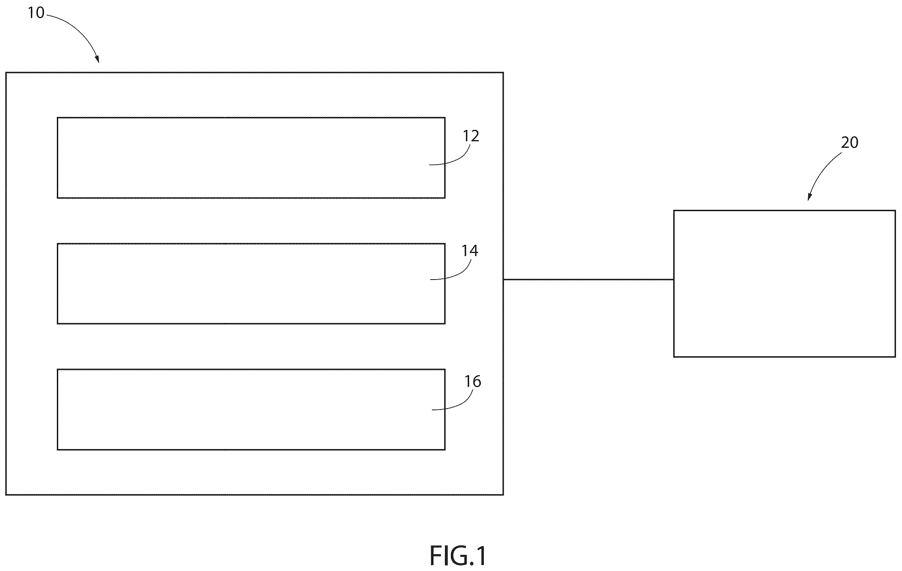

Figure 1 shows a system 10 for determining one or more target parameters of a vehicle 20.

By way of non-limiting example, the target parameters may include one or more cost/revenue parameters (such as "price per kilometer", PPK, revenue parameters, sales price, total financial cost of hire, cost of specific activities, accrual, PPK axle depreciation, monthly estimate, etc.), one or more utilization parameters (e.g., efficiency of the engine or other components of the vehicle, CO₂ emissions, etc.) and/or one or more other parameters of the vehicle 20.

In the following, the case of a single target parameter, namely the price per kilometer (PPK) of the vehicle 20, is taken as an example. Nevertheless, it is evident that the system 10 can calculate a plurality of target parameters, either in place of or in addition to the PPK.

The vehicle 20 may, for example, be a light vehicle (such as a passenger car or a motorcycle) or a heavy-duty vehicle (such as a van, a bus, a work vehicle, etc.).

By way of example, the system 10 is operatively connected to the vehicle 20 to acquire data from the vehicle 20. However, cases may also be considered in which the system 10 is decoupled from the vehicle 20 and for example stores therein the data of the vehicle 20 or is operatively connected to an external memory unit (e.g., an external server) in which these data are stored and to which the system 10 can access.

The system 10 comprises a configurator module (also called price configurator) 12 and a calculation module (also called calculation engine) 14, operatively coupled with each other.

The system 10 may also comprise, as better described below, a management module (also called a matrix manager) 16 operatively coupled to the configurator module 12 and, optionally, to the calculation module 14.

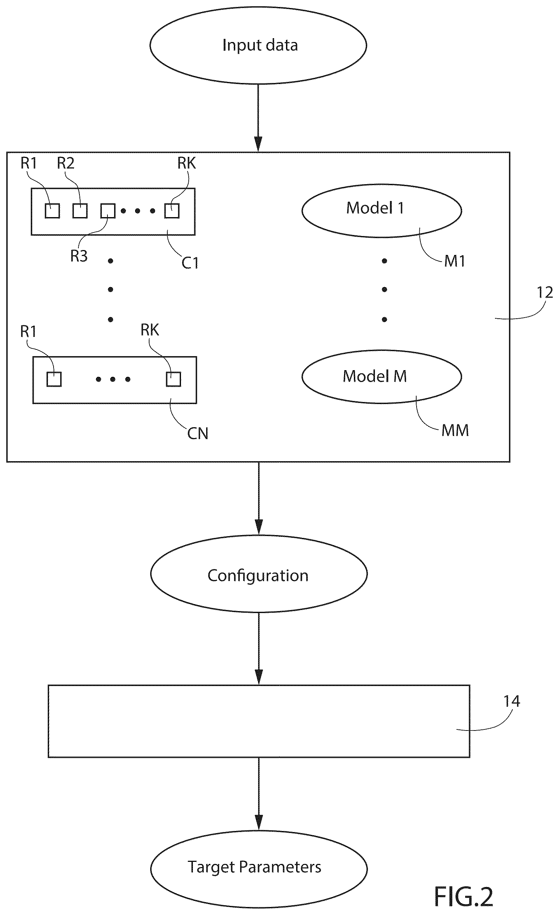

As shown in Figure 2, in use the configurator module 12 receives input data as input and generates one or more configurations (also called partial data sets) as output.

The input data comprises a plurality among the data mentioned here: insurance parameters of the vehicle 20; residual value of the vehicle 20; cost of the vehicle 20; driving data of the vehicle 20 (e.g., information about the driving style of the driver of the vehicle 20 and/or parameters acquired while driving the vehicle 20, for example during the testing phase of the vehicle 20); status of the vehicle 20 (e.g., status of the tires); mission data of the vehicle 20 (e.g., duration of the standard journey of the vehicle, type of road normally travelled during the driving mission, type of mission typically performed, etc.); physical business costs (e.g., registration cost, transportation cost, roading cost of the vehicle 20); service costs (e.g., insurance, tire service, e-commerce packages, etc.).

For example, the input data is acquired and stored as respective "PricingItems" (PI) elements. These elements can be identified by a unique code (e.g., DCOEEMD937659.MARKUP), for example comprising a "parentCode" (e.g., DCOEEMD937659) and a "subCode" (e.g., MARKUP). Each unique code can be associated with a price item corresponding to the economic value of the element considered. Each element can also be associated with an attribute called "regex", which allows the format for the value attribute to be verified.

The configurator module 12 generates one or more models M1-MM based on the input data.

This occurs according to criteria known per se, based on the needs of the specific application and the input data received (and therefore the availability of information of the system 10 for the calculation of the PPK).

Each model Mm (with m=1,...,M) corresponds to a template of information to be retrieved starting from the input data, for the calculation of the corresponding PPK.

In detail, each model Mm (with m=1,...,M) comprises a list of elements PI required to have a valid configuration (better described below).

For each element PI, the model Mm can indicate whether it is possible to retrieve its economic value directly or whether it is necessary to perform specific researches, in order to have it available for configuration.

In detail, a first part of the model Mm can be compiled directly based on the input data. For example, the elements PI may be stored in the model Mm, each in a respective dedicated position within the model Mm. In this case, each of these elements PI can be stored in the model Mm with a source item indicating this direct compilation starting from the input data (e.g., "Inputted" status).

In addition, a second part of the model Mm may require further research and actions by the configurator module 12 to be compiled. In this case, each of these elements PI can be stored in the model Mm with a source item indicating this indirect compilation (e.g., "Retrieved" status).

In this regard, as shown in Figure 2, the configurator module 12 may implement one or more configurators C1-CN.

Each configurator Cn (with n=1, ..., N) implements respective instructions on how to populate the price items of a model Mm, in particular of the second part of the model Mm.

For example, it is possible to have configurators Cn different from each other when the data to be retrieved are different from each other (e.g., a first configurator Cn1 for a first set of data and a second configurator Cn2 for a second set of data) and/or when the data sources are different from each other (e.g., a first configurator Cn1 for a first status and a second configurator Cn2 for a second status, where the same information is available for the two statuses in different sites) and/or when searching for information on different applications or utilizations (e.g., a first configurator Cn1 for a vehicle and a second configurator Cn2 for a charging column).

It is possible to have a configurator Cn for each model Mm (in this case one has that M=N) or to have a plurality of distinct configurators Cn for each model Mm (in this case one has that M<N), each of which compiles part of the respective model Mm using a respective logic based on the specific needs. For example, in the second case there may be a first sub-part of a specific model that can be filled by a first configurator that has access to an input portal, external to the configurator module 12 and operably couplable to the latter, and a second sub-part of this specific model that can be filled by a second configurator that has access to a public configuration on a company website, external to the configurator module 12 and operably couplable to the latter.

Each configurator Cn implements (i.e. retrieves) a plurality of researcher elements ("retriever") R1-RK. In detail, the number of researcher elements R1-RK may vary from configurator Cn to configurator Cn, based on the research and compilation needs of the different configurators C1-CN.

The researcher elements R1-RK are agents that automatically retrieve the values PI of interest. In other words, in each configurator Cn, each researcher element Rk (with k=1,...,K) is configured to selectively retrieve a piece of information relating to a respective and specific PI, for example from servers or sites external to the system 10.

For example, in a configurator Cn there may be a first researcher element Rk1 that retrieves information about the price of the tires, a second researcher element Rk1 that retrieves information about the cost of the insurance service, and a third researcher element Rk1 that retrieves information about tire consumption (e.g., based on the initial tire price retrieved by the first researcher element Rk1).

For example, each researcher element Rk has a corresponding configuration archived in a database, for example MongoDB. This configuration defines the list of fields required for the execution of the specific researcher element Rk and specifies which field can be filled with this researcher element Rk.

Consequently, the second part of the model Mm is compiled on the basis of the information that is retrieved through the researcher elements R1-RK of the respective configurator(s) Cn.

In particular, for each configurator Cn it is possible to parallelize the execution of the researcher elements R1-RK to improve the research performance of the configurator Cn, reducing research times.

In addition, for each configurator Cn it is possible to prioritize and group the execution of the researcher elements R1-RK on the basis of the research information of the researcher elements R1-RK (e.g., the researcher elements are executed in order depending on their priority and researcher elements with equal priority are executed in parallel). For example, if a second researcher element Rk2 requires, in order to perform its research, the value retrieved by a first researcher element Rk1, then the first researcher element Rk1 will have a higher priority than the second researcher element Rk2 and therefore the latter will be executed after the first researcher element Rk1. This allows the correct action of all researcher elements R1-RK, preventing any of them from being executed without the information necessary for its correct operation already being available.

The researcher elements R1-RK can also retrieve additional information and values, for example useful for audit purposes.

The researcher elements R1-RK may also generate a stop signal when errors are detected, and provide a corresponding list of error causes. For example, this occurs when the prioritization of the researcher elements R1-RK is incorrect.

After the launch of all researcher elements R1-RK of a specific configurator Cn, optionally an additional researcher element Rkf (also known as a "Sanity retriever" or security researcher element) can perform logical checks to verify whether the errors have been generated by the researcher elements R1-RK.

If the result of these logical checks is negative, an error message (or research operation error signal) is returned.

If, on the other hand, the result of these logical checks is positive, or if the additional researcher element Rkf is absent, the model Mm considered and compiled is stored as a configuration in output from the configurator module 12.

This output configuration can be defined on the basis of a single and respective model Mm (in this case, one has a plurality of configurations for a respective plurality of models) or on the basis of multiple models (in this case, one has for example a single configuration for all the models considered). Intermediate cases are obviously also possible.

In the following, the case of a single configuration is considered by way of example, but it is evident that the following discussion applies in a similar way also to the case of several configurations.

Optionally, in output from the configurator module 12, the configuration is stored, for example in a database such as MongoDB, as comprising an identification code (e.g., a "Universally Unique Identifier", UUID).

In addition, a checksum can be generated starting from the configuration by techniques known per se, for example by hashing the configuration data (e.g., MD5 type). This avoids that in the subsequent steps the configuration is altered, or at least reduces the risk that any alterations in the configuration are not detected and generate problems in terms of reliability of the system 10.

Following this, the calculation module 14 receives the configuration as input and generates the target parameters as output (e.g., the PPK).

In particular, in the event that the checksum has been previously generated, the calculation module 14 analyzes the checksum to verify whether the configuration received is original, i.e. conforms to the configuration in output from the configurator module 12, or if it has been altered in some way.

In case of alteration, the calculation module 14 generates an error signal.

Otherwise, the calculation module 14 proceeds with the actions described below.

The calculation module 14 determines the target parameters based on the data present in the received configuration.

In detail, the calculation module 14 stores calculation criteria, of known type, which allow obtaining the target parameters on the basis of the received configuration. For example, these calculation criteria comprise one or more mathematical formulas that allow to calculate the target parameters starting from the values stored in the configuration.

One or more other parameters (e.g., cost ones) may be calculated in addition to the PPK, e.g., intermediate parameters useful for the final calculation of the PPK.

The PPK, as well as any other target parameter, can be added to the configuration file, i.e. stored in it.

In addition, a calculation code (e.g., also called "EngineId") indicating the calculation engine of the calculation module 14, used for the calculations executed, can also be added to the configuration file. Accordingly, the calculation code indicates the calculation criteria used. This is useful in the case where multiple calculation parameters are determined, since it is possible to keep track, for example for each of them, of the criteria used for their calculation.

The PPK, and more generally all calculated target parameters, are provided as output from the calculation module 14, e.g. they are stored in a further database (e.g. MongoDB).

When present, the management module 16 facilitates communication between the system 10 and external systems, for example when the researcher elements R1-RK have to retrieve the information to compile the second part of the models M1-MM. In other words, the management module 16 operates as an interface between the system 10 and these external systems (which may comprise websites, external servers, clouds, external apparatuses, etc.).

In detail, the management module 16 operates as an interface between the configurator module 12 and these external systems.

For example, the management module 16 can access files (e.g., Excel files) external to the system 10, can import them into a "bucket", can save them in one or more corresponding template folders and can pre-process these data before providing them to the configurator module 12, to make them available to the latter.

In addition, the management module 16 can keep a historical record of each version of the uploaded file. This function allows users to download previous versions for review or to re-upload modified versions in the future.

The logical check performed by the management module 16 can analyze the correct application of the priority rules. This check is file-independent and can be easily reused and applied to new models, as well.

With the support of the researcher elements R1-RK, the configurator module 12 can choose the correct row in each template for each processing.

In use, the system 10 executes a method for determining these one or more target parameters, e.g., of the PPK.

The description of the method is not proposed here again as it clearly derives from the previously described operation of the system 10.

Further, this method is implemented by a corresponding computer program product storable in a control unit (e.g., in the system 10).

From an examination of the characteristics of the invention realized according to the present invention, the advantages that it allows to obtain are evident.

In fact, the system 10 allows one or more target parameters of the vehicle 20, for example a PPK thereof, to be determined starting from a multiplicity of data. This improves the accuracy and reliability of the calculation of the target parameters.

This causes the system 10 to operate as a stand-alone application: its previously described components are stand-alone, i.e. not tied to any specific front-end application or workflow, allowing for potential reusability thereof.

The system 10 is also modularizable: every single submodule is flexible, reusable, and highly configurable.

The system 10 is also standardizable: the common models and languages are in fact fundamental when managing a large number of variables, and defining the identification codes for each individual piece of data involved in each phase of the listing process improves its traceability.

The system 10 is also traceable: every single step of the process is traceable and analyzable, monitoring every change to ensure a reliable system.

Finally, it is clear that the invention described and shown herein, can be modified and varied without departing from the protective scope of the present invention, as defined in the attached claims.

For example, the various described embodiments may be combined with each other so as to provide further solutions.

Furthermore, the target data generated in output from the system 10 may be provided again in input to the system 10, as feedback for subsequent utilizations of the system 10. For example, the target data may become part of the subsequent input data.

In addition, the system 10 may implement modifiers to the values of the PIs: if the PI is one of those classified as subject to modification, the modifier may apply variations (e.g., discounts) to the value saved therein. For example, the residual value of the vehicle 20 may be discounted by a predefined value, in certain situations.

## Claims

1. System (10) for determining one or more target parameters of a vehicle (20),
the system (10) comprising a configurator module (12) and a calculation module (14) operatively coupled with each other,
wherein the configurator module (12) is configured to receive input data as input and, based on the input data, generate at least one configuration as output,
the configurator module (12) being configured, on the basis of the input data, to implement one or more models (M1-MM), each corresponding to a respective list of information to be retrieved starting from the input data for determining the one or more target parameters, and to compile the one or more models (M1-MM) according to the input data, said at least one configuration corresponding to the one or more models (M1-MM) compiled, and
wherein the calculation module (14) is configured to receive the at least one configuration and, based on the at least one configuration, generate in output said one or more target parameters.

2. System according to claim 1, wherein the configurator module (12) is configured to implement one or more configurators (C1-CN), each being configured to implement one or more respective researcher elements (R1-RK),
wherein each of the one or more models (M1-MM) comprises a first part of the list, configured to be compiled directly based on the input data, and a second part of the list, configured to be compiled indirectly by at least one of the one or more configurators (C1-CN) via the one or more respective researcher elements (R1-RK),
wherein each of the one or more respective researcher elements (R1-RK) is configured to selectively retrieve a respective external information with which to compile the second part of the list.

3. System according to claim 2, wherein at least one of the one or more of the one or more configurators (C1-CN) is configured to implement a plurality of said one or more respective researcher elements (R1-RK) and is configured to utilize the respective researcher elements (R1-RK) in a parallelized manner and to manage the order of execution of the researcher elements (R1-RK) so that researcher elements (R1-RK) with lower priority are executed after researcher elements (R1-RK) with higher priority and utilize external information retrieved from the researcher elements (R1-RK) with higher priority.

4. System according to claim 2 or 3, wherein the system (10) is operatively coupled to the one or more external systems and further comprises a management module (16) operatively coupled to the configurator module (12) and operatively couplable to the one or more external systems,
the management module (16) being configured to interface the system (10) and the one or more external systems to retrieve the external information and/or the input data.

5. A system according to any of the preceding claims, wherein the one or more target parameters include one or more of the following: one or more cost/revenue parameters, in particular one or more among a price per kilometer, PPK, of the vehicle (20), revenue parameters, sales price, total financial cost of hire, cost of specific activities, accrual, PPK axle depreciation, monthly estimate; one or more utilization parameters, in particular an efficiency of an engine or a component of the vehicle (20), gas emissions.

6. A system according to any of the preceding claims, wherein the input data comprises a plurality among the following: insurance parameters of the vehicle (20); residual value of the vehicle (20); cost of the vehicle (20); driving data of the vehicle (20), in particular information about a driving style of a driver of the vehicle (20) and/or parameters acquired while driving the vehicle (20); status of the vehicle (20); mission data of the vehicle (20); physical business costs, particularly one or more among a registration cost, a transportation cost, a roading cost of the vehicle (20); service costs, particularly one or more among insurance, tire service, e-commerce packages.

7. A system according to any one of the preceding claims, wherein the system (10) is configured to store input data by means of a unique code and a price item associated with each other, the price item corresponding to an economic value of the considered item corresponding to the respective input data.

8. System according to any one of the preceding claims, wherein the system (10) is configured to be operatively connected to the vehicle (20) to acquire data from the vehicle (20), said data being included in the input data.

9. System according to any one of the preceding claims, wherein the configurator module (12) is configured to determine a checksum starting from the at least one configuration, and wherein the calculation module (14) is configured to analyze the checksum to verify the configuration.

10. Method for determining one or more target parameters of a vehicle (20),
the method being performed by a system (10) comprising a configurator module (12) and a calculation module (14) operatively coupled together,
the method comprising the steps of:
- receiving, by the configurator module (12), input data;
- generating, by the configurator module (12) and on the basis of the input data, at least one configuration, wherein the configurator module (12) is configured, on the basis of the input data, to implement one or more models (M1-MM), each corresponding to a respective list of information to be retrieved from the input data for determining the one or more target parameters, and to compile the one or more models (M1-MM) according to the input data, said at least one configuration corresponding to the one or more models (M1-MM) compiled;
- receiving, from the calculation module (14), the at least one configuration; and
- generating, by the calculation module (14) and based on the at least one configuration, said one or more target parameters.

11. Computer program product storable in a control unit,
the computer program being designed so that, when executed, the control unit becomes configured to execute a method according to claim 10.
